# EUROPÄISCHE PATENTANMELDUNG

(11) **EP 0 638 524 A1**
(43) Veröffentlichungstag der Anmeldung: **15.02.1995**
(21) Anmeldenummer: 94112397.8
(22) Anmeldetag: 09.08.1994
(51) Int. Cl.: C02F 11/12, F26B 3/12, B01D 53/00

(54) **Anordnung zur Reduzierung des Feuchtegehalts von Schlamm**

(30) Priorität: 14.08.1993 DE 9312198 U
(71) Anmelder: LANGBEIN & ENGELBRACHT GmbH & CO. KG, D-44879 Bochum (DE)
(72) Erfinder: Schneider, Heiko, 75038 Oberderdingen (DE)
(74) Vertreter: Bockermann, Rolf, Dipl.-Ing.

(57) **Zusammenfassung**

Die Erfindung betrifft eine Anordnung zur Reduzierung des Feuchtegehalts von Schlamm, gekennzeichnet durch einen mit dem Schlamm, einem gas- oder dampfförmigen Zerstäubungsmittel sowie Heißgas beaufschlagbaren Sprühtrockner (8), eine dem Sprühtrockner (8) mittels einer Überführungsleitung (18) nachgeordnete Separiereinheit (19) mit Feststoffaustrag (21) und einen das in der Separiereinheit (19) anfallende Gas auf ein höheres Temperaturniveau bringenden Erhitzer (31) in einer Verbindungsleitung (16, 30) zwischen der Separiereinheit (19) und dem Sprühtrockner (8).

## Beschreibung

Die Erfindung betrifft eine Anordnung zur Reduzierung des Feuchtegehalts von Schlamm gemäß dem Oberbegriff des Anspruchs 1.

Schlamm als Bioschlamm fällt u.a. bei der biologischen Klärung von industriellen Abwässern, beispielsweise den Abwässern einer Deinking-Flotationsanlage, an. Er wurde bislang meistens als Abfallprodukt angesehen und demzufolge nicht weiter genutzt. Seine Ablagerung erfolgte auf Deponien. Im Hinblick auf seinen geringen Trockensubstanzgehalt ist Bioschlamm jedoch nur schwer deponiefähig und mußte daher oft mit anderen Abfällen mit höheren Feststoffgehalten vermischt werden, um überhaupt auf einer Deponie abgelagert werden zu können. Verbunden mit der Ablagerung auf Deponien ist aber der Transport des Bioschlamms zur Deponie, der durchweg mit relativ hohen Kosten bei entsprechendem Aufwand verbunden war. Auch die Belastung des Straßenverkehrs war dadurch hoch. Ferner waren die Deponiekosten extrem hoch, zumal immer weniger geeigneter Deponieraum zur Verfügung gestellt werden kann. Darüberhinaus werden die Vorschriften des Umweltschutzes in Bezug auf die Deponiefähigkeit von Abfällen verschärft, so daß auch die hiermit verbundenen Kosten entscheidend zu Buche schlagen.

Im wesentlichen dieselben Probleme ergeben sich auch bei Industrieschlämmen in Form von z.B. Ölschlämmen oder lösemittelbeladenen Schlämmen. Zusätzlich ist bei diesen Arten von Schlämmen noch der Nachteil gegeben, daß diese nicht auf normalen Deponien abgelagert werden können, sondern Sonderdeponien zugeführt werden müssen.

Der Erfindung liegt ausgehend von der im Oberbegriff des Anspruchs 1 beschriebenen Anordnung die Aufgabe zugrunde, diese so auszugestalten, daß nicht nur der Anteil an zu deponierendem Schlamm erheblich verringert, sondern auch dieser Schlamm im ganzen oder hinsichtlich einzelner Fraktionen einer weiteren Nutzung zugeführt werden kann.

Die Lösung dieser Aufgabe besteht nach der Erfindung in den im kennzeichnenden Teil des Anspruchs 1 aufgeführten Merkmalen.

Danach wird jetzt der Schlamm in ein Feststoffprodukt mit hohem Trockengehalt überführt. Dieser Trockengehalt wird erfindungsgemäß dadurch erzielt, daß der Schlamm in dem Sprühtrockner unter Zuhilfenahme von Druckluft oder Dampf als Zerstäubungsmittel fein verteilt und dadurch eine sehr große Oberfläche erreicht wird. Da die Zerstäubung in den Heißgasstrom hinein erfolgt, bewirkt diese große Oberfläche eine schnelle thermische Trocknung. Das abgekühlte Heißgas fällt als Abgas in der Separiereinheit an, welches über einen Erhitzer geführt, dadurch erwärmt und anschließend erneut dem Sprühtrockner zugeführt wird. Durch diese Umluftfahrweise wird ein unnötiger Sauerstoffeintritt vermieden bzw. die O₂-Konzentration gesenkt.

Das in der Separiereinheit ausgeschiedene Feststoffprodukt wird über einen der Separiereinheit nachgeschalteten Austrag abgeführt, insbesondere kontinuierlich abtransportiert.

Durch die erfindungsgemäße thermische Trocknung des Schlamms wird der Vorteil erzielt, daß nur noch eine verschwindend kleine Menge Schlamm in Form eines Feststoffprodukts anfällt, das dann einen erheblich verringerten Deponieraum beansprucht. Außerdem werden die Transportkosten für ein solches Feststoffprodukt nicht nur aufgrund der geringeren Menge, sondern auch aufgrund seiner trockenen Eigenschaft wesentlich verringert. Darüberhinaus kann bei entsprechender Zusammensetzung des Feststoffprodukts aus insbesondere Bioschlämmen, vorzugsweise bei bestimmten Chemikalieneinsätzen in den vorgeschalteten Prozessen wie Wasserglas, Schmierseife, Fettsäuren, Natriumperoxid u.a., das somit hochwertige Feststoffprodukt weiter genutzt, d.h. beispielsweise bei der Rekultivierung im Landschafts- und Gartenbau als Bewässerungsträger nährstoffarmer Böden eingesetzt werden. Ferner ist es möglich, das Feststoffprodukt als Basismaterial zur Herstellung organischer Düngemittel zu verwenden oder der Verbrennung zuzuführen. Die aus z.B. Ölschlämmen gewonnenen Feststoffprodukte sind jetzt mit besonderem Vorteil in Verbindung mit ergänzenden Zuschlägen - ggf. in Verbindung mit einer Nachbehandlung - als Materialien für den Straßenbau einsetzbar.

Die Beaufschlagung des Sprühtrockners mit Schlamm erfolgt über eine Zuführleitung, in die eine Pumpe, insbesondere eine Schneckenpumpe, integriert ist. Die Pumpe übernimmt den z.B. aus einer Zentrifuge oder einer Siebbandpresse stammenden oder direkt im Produktionsprozeß anfallenden Schlamm und fördert ihn in den oberen Bereich des Sprühtrockners, wo der Schlamm mit dem gas- oder dampfförmigen Zerstäubungsmittel in den Heißgasstrom hinein fein verteilt wird. Am unteren Ende des Sprühtrockners liegt dann ein weitgehend trockenes Feststoffprodukt mit einer geringen Restfeuchte vor. Dieses Feststoffprodukt wird zusammen mit dem Gasstrom, bestehend aus der abgekühlten Heißluft, der Druckluft oder dem Dampf sowie aus der aus dem Schlamm verdampften Feuchtigkeit (z.B. Wasser oder sonstige Lösungsmittel) der Separiereinheit zugeleitet, in welcher die Separierung des Feststoffprodukts von den gasförmigen Bestandteilen erfolgt.

Eine vorteilhafte Ausführungsform der Erfindung wird in den Merkmalen des Anspruchs 2 gesehen. Danach wird im Sprühtrockner eine Zweistoffdüse verwendet, die mit dem Schlamm und dem Zerstäubungsmittel (Druckluft oder Dampf) beaufschlagt wird. Das am oberen Ende in den Sprühtrockner eintretende Heißgas wird gleichmäßig oberhalb der Zweistoffdüse verteilt und damit das Gas-Feststoff-Gemisch, das aus der Zweistoffdüse tritt, beaufschlagt. Da der Feststoff in diesem Gemisch fein verteilt ist, hat er eine große spezifische Oberfläche, die somit einen äußerst intensiven Wärmeaustausch mit dem Heißgas sicherstellt und folglich einen hohen Trocknungsgrad bewirkt.

Nach Anspruch 3 kann der zwischen der Separiereinheit und dem oberen Ende des Sprühtrockners liegende Erhitzer aus einem fremdbeheizten Wärmetauscher gebildet sein. Wodurch der Wärmetauscher beheizt wird, ist im Prinzip nebensächlich. Statt eines fremdbeheizten Wärmetauschers kann aber auch eine direkt befeuerte Brennkammer als Erhitzer vorgesehen werden.

Zur besseren Förderung des aus der Separiereinheit tretenden Gasstroms über den Erhitzer hinweg zum Sprühtrockner sieht die Erfindung gemäß Anspruch 4 ein Gebläse vor, das zwischen die Separiereinheit und den Erhitzer eingegliedert ist.

Ein zweckmäßiger Austrag für das Feststoffprodukt wird entsprechend den Merkmalen des Anspruchs 5 durch eine Zellenradschleuse gebildet, die am unteren Ende der Separiereinheit vorgesehen ist. Bei zur Anbackung neigenden Produkten kann aber anstelle einer Zellenradschleuse auch eine entsprechend ausgebildete Austragsvorrichtung, wie beispielsweise eine Doppelpendelklappe, vorgesehen werden.

Da systembedingt das Feststoffprodukt staubförmig anfällt, es aber häufig in dieser Form in der Weiterverarbeitung nicht gewünscht wird, sieht die Erfindung gemäß Anspruch 6 vor, daß dem Feststoffaustrag eine Vorrichtung zum Granulieren des Feststoffprodukts nachgeschaltet ist. Hierbei ist es möglich, bei dieser Granulierung auch noch Zumischungen, wie beispielsweise Kalium und Magnesium, durchzuführen. Dadurch liegt letztlich ein Granulat vor, das vorzugsweise als Düngemittel geeignet ist. Der Vorrichtung zum Granulieren des Feststoffprodukts kann eine Förderschnecke nachgeschaltet sein, die das Granulat einer Abfülleinheit zuleitet.

Nach Anspruch 7 wird ein geringer Teil des aus der Separiereinheit tretenden Gasstroms vor dem Erhitzer abgezweigt und einer Brennkammer als Verbrennungsluft zugeführt. Diese wird beispielsweise mit Faulgas, Methan, Erdgas usw. beheizt. Auf diese Weise werden organische Bestandteile des Gasstroms verbrannt, so daß dann die über den Wärmetauscher in die Atmosphäre tretenden Abgase die Umwelt gar nicht oder jedenfalls nicht relevant beeinträchtigen. Insbesondere werden durch die Verbrennung geruchsbelästigende Bestandteile des Gasstroms beseitigt.

Eine weitere Ausführungsform zur Vermeidung der Freisetzung von Gerüchen ist in den Merkmalen des Anspruchs 8 gekennzeichnet. Auch hierbei wird ein Teil des aus der Separiereinheit tretenden Gasstroms abgezweigt, aber dann einem Wäscher zugeführt. In diesem Wäscher wird der Gasstrom gekühlt, und zwar von etwa 100 °C auf 40 °C und dabei befeuchtet. Die Befeuchtung dient dazu, daß in einem nachgeschalteten Biofilter eine einwandfreie Umsetzung der geruchsbelästigenden Bestandteile des Gasstroms erfolgen kann. Aus dem Biofilter tritt dann nur reine Abluft in die Atmosphäre aus.

Im Rahmen der Erfindung ist es aber auch denkbar, daß gemäß Anspruch 9, insbesondere bei aus Industrieprozessen stammenden Ölschlämmen oder lösemittelbeladenen Schlämmen, an die Leitung zwischen der Separiereinheit und dem Erhitzer eine Kondensationsvorrichtung mit einer speziellen Wärmeaustauschfläche angeschlossen ist. Diese Wärmeaustauschfläche wird von einem Kühlmedium, insbesondere Kühlwasser, so beaufschlagt, daß aus der Kondensationsvorrichtung einzelne Fraktionen in Form von Flüssigkeit temperaturabhängig abgezogen und einer Weiterbehandlung zugeführt werden können. Sie können auch direkt in den Produktionsprozeß eingeleitet werden.

Desweiteren ist es denkbar, gemäß Anspruch 10 der Kondensationsvorrichtung noch eine Schwermetallabscheidung nachzuschalten. Eine solche Schwermetallabscheidung kann aber auch der Kondensationsvorrichtung vorgeschaltet sein.

Die Erfindung ist nachfolgend anhand von in den Zeichnungen dargestellten Ausführungsbeispielen näher erläutert.
Es zeigen:
- Figur 1: im Schema eine Anordnung zur Reduzierung des Feuchtegehalts von Bioschlamm und
- Figur 2: ebenfalls im Schema eine weitere Ausführungsform einer derartigen Anordnung.

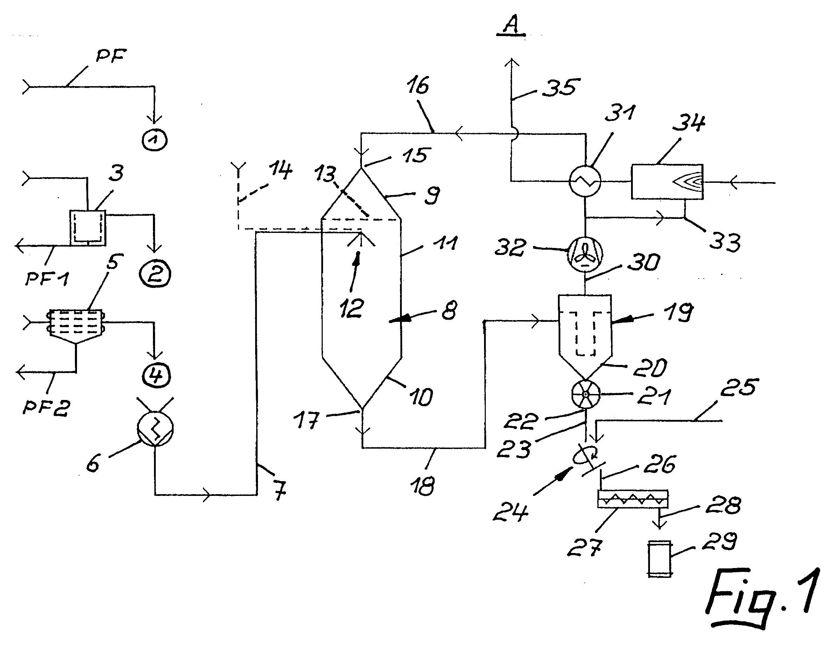

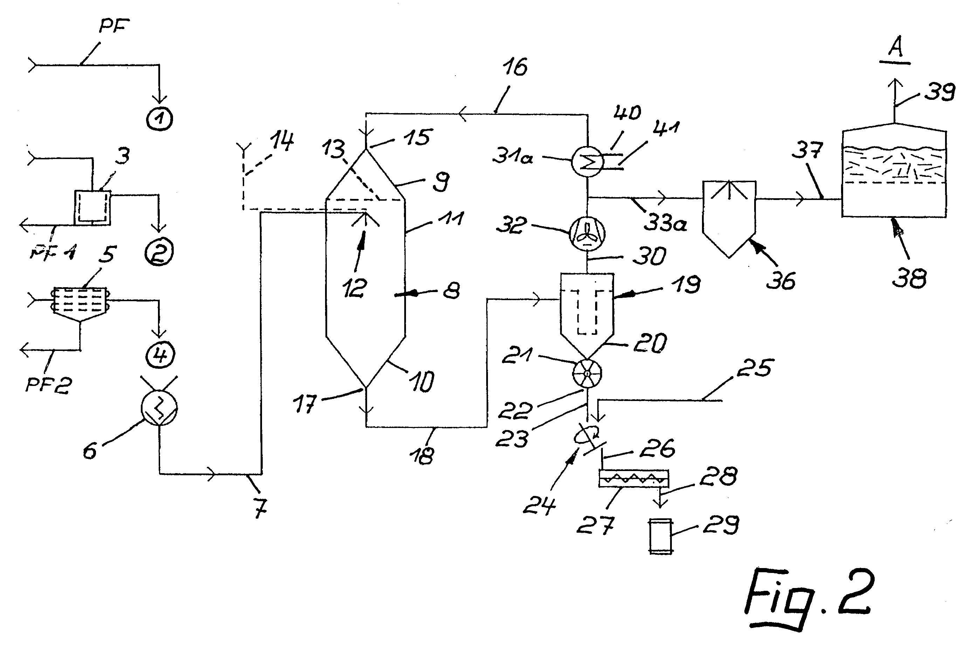

Wie bei gemeinsamer Betrachtung der Figuren 1 und 2 zu erkennen ist, kann entsprechend dem Pfeil PF Bioschlamm in Form von Schaum bei 1 anfallen.

Bioschlamm kann aber auch bei 2 am Austritt aus einer Zentrifuge 3 anfallen. Das Klarwasser aus der Zentrifuge 3 wird gemäß dem Pfeil PF1 abgeführt.

Schließlich kann Bioschlamm bei 4 am Austritt aus einer Siebbandpresse 5 anfallen. Hier wird das Klarwasser gemäß dem Pfeil PF2 abgeführt.

Der bei 1, 2 oder 4 anfallende Bioschlamm gelangt zu einer Schneckenpumpe 6, mit deren Hilfe der Bioschlamm über eine Zuführleitung 7 in einen Sprühtrockner 8 überführt wird. Der Sprühtrockner 8 ist als im wesentlichen zylindrischer Behälter 11 mit konischen Endabschnitten 9, 10 gestaltet. Die Zuführleitung 7 endet mittig im Behälter 11 in einer Zweistoffdüse 12. Die Zweistoffdüse 12 liegt knapp unterhalb einer Verteilerebene 13 im Übergang vom Behälter 11 auf den oberen konischen Endabschnitt 9. Ferner wird der Zweistoffdüse 12 über eine Leitung 14 Druckluft oder Dampf zugeführt.

Am Kopfende 15 des oberen konischen Endabschnitts 9 mündet eine Leitung 16, über die Heißgas in den Sprühtrockner 8 geleitet wird.

Im Fußpunkt 17 des unteren konischen Endabschnitts 10 des Sprühtrockners ist eine Überführungsleitung 18 angeschlossen, welche mit einer als Filter ausgebildeten Separiereinheit 19 verbunden ist.

Die Separiereinheit 19 besitzt am unteren konischen Ende 20 eine Zellenradschleuse 21, deren Austrag 22 über eine Leitung 23 mit einer Vorrichtung 24 zur Granulierung eines im wesentlichen staubförmigen Feststoffprodukts verbunden ist. Desweiteren mündet in diese Vorrichtung 24 zur Granulierung eine Leitung 25, über die beispielsweise Kalium oder Magnesium zugemischt werden kann.

Die Vorrichtung 24 zur Granulierung ist über eine Leitung 26 mit einem Schneckenförderer 27 verbunden, der andererseits über eine Leitung 28 mit einer Abfülleinheit 29 gekoppelt ist.

Am oberen Ende der Separiereinheit 19 schließt sich eine Gasleitung 30 an, die bis zu einem Wärmetauscher 31, 31a geführt ist. In diese Gasleitung 30 ist ein Gebläse 32 integriert. Am anderen Ende des Wärmetauschers 31, 31a ist die mit dem oberen konischen Endabschnitt 9 des Sprühtrockners 8 verbundene Leitung 16 angeschlossen.

Zwischen dem Gebläse 30 und dem Wärmetauscher 31, 31a ist ein Abzweig 33, 33a an die Gasleitung 30 angeschlossen.

Bei der Ausführungsform der Figur 1 mündet der Abzweig 33 in eine Brennkammer 34, welche mit einem Brennstoff wie z.B. Faulgas, Methan oder Erdgas beschickt wird. Das heiße Abgas aus der Brennkammer 34 wird über den Wärmetauscher 31 geführt und tritt von hier aus über eine Leitung 35 in die Atmosphäre A ein.

Bei der Ausführungsform der Figur 2 mündet der Abzweig 33a in einen Wäscher 36. Dieser ist über eine Leitung 37 mit einem Biofilter 38 verbunden. Am oberen Ende des Biofilters 38 ist eine in die Atmosphäre A mündende Abluftleitung 39 angeschlossen.

Der Wärmetauscher 31a ist fremdbeheizt. Die Anschlüsse sind mit 40 und 41 bezeichnet.

Der über die Zweistoffdüse 12 mit Hilfe von Druckluft oder Dampf fein zerstäubte Bioschlamm hat hinsichtlich seines Feststoffanteils eine große Oberfläche. Dadurch ist mit Hilfe des am oberen konischen Endabschnitt 9 in den Sprühtrockner 8 eingeführten Heißgases eine schnelle innige thermische Trocknung der Trockensubstanz möglich.

Das insofern getrocknete Feststoffprodukt wird dann durch den Luftstrom über die Überführungsleitung 18 zur Separiereinheit 19 transportiert. In der Separiereinheit 19 wird das Feststoffprodukt von dem Gasstrom getrennt. Das Feststoffprodukt wird über die Zellenradschleuse 21 ausgetragen und ggf. unter Granulierung der Abfülleinheit 29 zugeführt.

Der in der Separiereinheit 19 gereinigte Gasstrom gelangt mit Hilfe des Gebläses 32 zum Wärmetauscher 31, 31a, wird hier erhitzt und dann als Heißgas in den Sprühtrockner 8 geleitet.

Ein geringer Teilstrom des entstaubten Gasstroms wird bei der Ausführungsform der Figur 1 über den Abzweig 33 in die Brennkammer 34 geleitet, wo er als Verbrennungsluft für ein Beheizungsverfahren mittels Gas dient. Durch die Verbrennung gereinigt gelangt das Abgas über die Leitung 35 in die Atmosphäre A.

Bei der Ausführungsform der Figur 2 wird über den Abzweig 33a ebenfalls ein geringer Teilstrom abgezweigt, im Wäscher 36 gekühlt, neutralisiert und dem Biofilter 38 zugeführt, wo er von Gerüchen befreit und dann in die Atmosphäre A überführt wird.

### Bezugszeichenaufstellung

- 1 -: Sammelpunkt
- 2 -: Sammelpunkt
- 3 -: Zentrifuge
- 4 -: Sammelpunkt
- 5 -: Siebbandpresse
- 6 -: Schneckenpumpe
- 7 -: Zuführleitung
- 8 -: Sprühtrockner
- 9 -: oberer Endabschnitt v. 8
- 10 -: unterer Endabschnitt v. 8
- 11 -: Behälter
- 12 -: Zweistoffdüse
- 13 -: Verteilerebene
- 14 -: Leitung
- 15 -: Kopfende v. 9
- 16 -: Leitung
- 17 -: Fußpunkt v. 10
- 18 -: Überführungsleitung
- 19 -: Separiereinheit
- 20 -: konisches Ende v. 19
- 21 -: Zellenradschleuse
- 22 -: Austrag v. 21
- 23 -: Leitung
- 24 -: Vorrichtung zur Granulierung
- 25 -: Leitung
- 26 -: Leitung
- 27 -: Schneckenförderer
- 28 -: Leitung
- 29 -: Abfülleinheit
- 30 -: Gasleitung
- 31 -: Wärmetauscher
- 31a -: Wärmetauscher
- 32 -: Gebläse
- 33 -: Abzweig
- 33a -: Abzweig
- 34 -: Brennkammer
- 35 -: Leitung
- 36 -: Wäscher
- 37 -: Leitung
- 38 -: Biofilter
- 39 -: Abluftleitung
- 40 -: Anschluß an 31a
- 41 -: Anschluß an 31a
- A -: Atmosphäre
- PF -: Pfeil
- PF1-: Pfeil
- PF2-: Pfeil

## Patentansprüche

1. Anordnung zur Reduzierung des Feuchtegehalts von Schlamm, **gekennzeichnet durch** einen mit dem Schlamm, einem gas- oder dampfförmigen Zerstäubungsmittel sowie Heißgas beaufschlagbaren Sprühtrockner (8), eine dem Sprühtrockner (8) mittels einer Überführungsleitung (18) nachgeordnete Separiereinheit (19) mit Feststoffaustrag (21) und einen das in der Separiereinheit (19) anfallende Gas auf ein höheres Temperaturniveau bringenden Erhitzer (31, 31a) in einer Verbindungsleitung (16, 30) zwischen der Separiereinheit (19) und dem Sprühtrockner (8).

2. Anordnung nach Anspruch 1, **dadurch gekennzeichnet**, daß am oberen Ende des als zylindrischer Behälter (11) mit konischen Endabschnitten (9, 10) gestalteten Sprühtrockners (8) eine mit dem Schlamm und dem Zerstäubungsmittel beaufschlagbare Zweistoffdüse (12) und oberhalb der Zweistoffdüse (12) ein Verteiler (13) für Heißgas vorgesehen ist.

3. Anordnung nach Anspruch 1 oder 2, **dadurch gekennzeichnet**, daß der Erhitzer (31, 31a) durch einen fremdbeheizten Wärmetauscher gebildet ist.

4. Anordnung nach einem der Ansprüche 1 bis 3, **dadurch gekennzeichnet**, daß zwischen der Separiereinheit (19) und dem Erhitzer (31, 31a) ein Gebläse (32) vorgesehen ist.

5. Anordnung nach einem der Ansprüche 1 bis 4, **dadurch gekennzeichnet**, daß der Feststoffaustrag (21) durch eine Zellenradschleuse gebildet ist.

6. Anordnung nach einem der Ansprüche 1 bis 5, **dadurch gekennzeichnet**, daß dem Feststoffaustrag (21) eine Vorrichtung (24) zum Granulieren des Feststoffprodukts nachgeordnet ist.

7. Anordnung nach einem der Ansprüche 1 bis 6, **dadurch gekennzeichnet**, daß an die Leitung (30) zwischen der Separiereinheit (19) und dem Erhitzer (31) ein zu einer brennstoffbeheizten Brennkammer (34) führender Abzweig (33) angeschlossen ist, wobei die Abgase der Brennkammer (34) zunächst über den Erhitzer (31) und dann in die Atmosphäre (A) geführt sind.

8. Anordnung nach einem der Ansprüche 1 bis 6, **dadurch gekennzeichnet,** daß an die Leitung (30) zwischen der Separiereinheit (19) und dem Erhitzer (31a) ein zu einem Wäscher (36) führender Abzweig (33a) angeschlossen ist, wobei ein mit der Atmosphäre (A) verbundener Biofilter (38) dem Wäscher (36) nachgeordnet ist.

9. Anordnung nach einem der Ansprüche 1 bis 5, **dadurch gekennzeichnet**, daß an die Leitung zwischen der Separiereinheit (19) und dem Erhitzer (31a) ein zu einer mit einem Kühlmedium beaufschlagbaren Kondensationsvorrichtung führender Abzweig angeschlossen ist, wobei die Kondensationsvorrichtung mit Abzugseinrichtungen für diverse temperaturabhängig ausgeschiedene Fraktionen versehen ist.

10. Anordnung nach Anspruch 9, **dadurch gekennzeichnet**, daß der Kondensationsvorrichtung eine Schwermetallabscheidung vor- oder nachgeschaltet ist.
